# EUROPEAN PATENT SPECIFICATION

(11) **EP 1 994 529 B1**
(45) Date of publication and mention of the grant of the patent: **07.12.2011**
(21) Application number: 07750697.0
(22) Date of filing: 13.02.2007
(51) Int. Cl.: G10L 15/12, G10L 15/18, G10L 15/02, G10L 15/22

(54) **COMMUNICATION DEVICE HAVING SPEAKER INDEPENDENT SPEECH RECOGNITION**
KOMMUNIKATIONSGERÄT MIT LAUTSPRECHERUNABHÄNGIGER SPRACHERKENNUNG
DISPOSITIF DE COMMUNICATION DOTE DE RECONNAISSANCE VOCALE INDEPENDANTE DU LOCUTEUR

(30) Priority: 14.02.2006 US 773577 P
(43) Date of publication of application: 26.11.2008
(73) Proprietor: Intellectual Ventures Fund 21 LLC, Carson City NV 89706 (US)
(72) Inventor: RUWISCH, Dietmar, D-12557 Berlin (DE)
(74) Representative: Kazi, Ilya
(86) International application number: PCT/US2007/003876
(87) International publication number: WO 2007/095277

(56) References cited:
- EP-A- 1 369 847
- EP-A1- 1 327 976
- EP-A2- 1 189 419
- US-A- 5 930 751
- HIROSE K ET AL: "Spoken word recognition for multiple speakers based on path-limited DP matching and a method for speaker normalization" ICASSP'90, 3 April 1990 (1990-04-03), pages 605-608, XP010641656 Albuquerque, NM, USA

## Description

### BACKGROUND

### Technical Field

The described technology relates generally to communication devices and techniques for speaker independent speech recognition in such communication devices.

### Description of the Related Art

Mobile phones have become equipped with speaker dependent name dialing to enable special functions to be carried out, such as automatic hands-free dialing. In mobile phone environments, hands-free dialing by use of speech recognition is particularly useful to enable a user to place calls while driving by reciting a name or number of a called party. The mobile phone converts the user's speech into feature data, which is further processed by speech recognition means. To recognize a name or number of a called party spoken by the user, such mobile phones require training in advance of utterances of the names or numbers that shall be recognized. Typically, the feature data of the user's speech is compared to different sets of pre-stored feature data corresponding to names previously recorded by the user during a registration or training process. If a match is found, the number corresponding to the name is automatically dialed by the mobile phone.

Conventionally, before voice dialing using a mobile phone with voice recognition capability, utterances of the names to be recognized must be trained in advance during a registration process. In a training phase, a user has to speak the names and commands to be recognized, and the corresponding utterances are recorded and stored by the mobile phone. Typically, the user has to speak the desired names and commands several times in order to have the speech recognition means generate audio feature data from different recorded utterance samples of a desired name or command. This training phase of the recognition process is very inconvenient for the user and, thus, the voice dialing feature is not very well accepted by most of the users.

As a further drawback it has turned out that a phone number of a new person whose name was not previously trained in the recognition process cannot be voice dialed since no audio feature data has been recorded and stored for this name. Therefore, the registration process has to be carried out once again for this name, which is a considerable effort for the user.

It has further turned out that the noise consistency of such mobile phones with voice dialing functionality is not very high. This is a problem when the user tries to place a voice dialed call while driving a car because the mobile phone environment is very noisy.

Since the pre-recorded feature data recorded and stored in the training phase corresponds to the utterance of a certain specific user, the feature comparison in the speech recognition process during voice dialing is speaker/user dependent. If a name for which feature data has been pre-recorded by the mobile phone is spoken by another, subsequent user, the recognition rate will be considerable low. Also in this case, after that newly recorded utterances of names spoken by the subsequent user are registered, the phone will not recognize that name if spoken by the original user.

A further inconvenience to the user is the requirement that for the training phase, the mobile phone environment should be at a low noise level to generate feature data of a spoken name that is less affected by noise. However, due to different noise levels during the registration and the recognition process, noise consistency of known mobile phones is considerably low and false recognition or a recognition error may result. This can result in an undesired party being called or excessive non-recognition of utterances.
EP-A-1369847 discloses a speech recognition method in which phonetic word models comprising sub-models are used to represent words to be recognized, and in which feature vectors are generated from frames of an input speech signal. A matching likelihood vector is generated for each of the feature vectors, wherein each component of the likelihood vector is the likelihood for an utterance of a respective word sub-model, and a recognition result is determined from a best matching word model by warping a sequence of matching likelihood vectors to sequences of sub-models of word models to be recognized.

### STATEMENT OF INVENTION

The present invention provides a method for performing speech recognition in a communication device with a voice dialing function, comprising: a) entering a speech recognition mode; b) upon receipt of a voice input in the speech recognition mode, generating input spectral feature vectors from voice input; c) calculating a likelihood vector sequence from the input spectral feature vectors indicating a likelihood in time of an utterance of phonetic units; d) warping the likelihood vector sequence to phonetic word models; e) calculating word model match likelihoods from the phonetic word models; and f) determining a best matching one of the word model match as recognition result; wherein each of the likelihood vectors is calculated from a respective input spectral feature vector using a stored representation of a chosen language that includes likelihood distributions calculated from representative ones of the spectral feature vectors of the phonetic units indicating a statistic distribution of the representative spectral feature vectors in feature space.
[0008c] Further aspects of the invention are characterized in the appended claims.

### BRIEF DESCRIPTION OF THE DRAWINGS

Fig. 1 depicts a block diagram of an apparatus for performing speech recognition, according to one embodiment.

Fig. 2 depicts a flow diagram illustrating a speech recognition process in a communication device, according to one embodiment.

Figs. 3, 4A, 4B, and 5 depict flow diagrams illustrating in more detail operations performed in a speech recognition process in a communication device, according to various embodiments.

Figs. 6 and 7 depict a block diagram of a communication device configured to perform a speech recognition process according to various embodiments.

### DETAILED DESCRIPTION

The embodiment(s) described, and references in the specification to "one embodiment", "an embodiment", "an example embodiment", etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is understood that it is within the knowledge of one skilled in the art to effect such feature, structure, or characteristic in connection with other embodiments whether or not explicitly described.

The various embodiments will now be described with reference to the accompanying drawings. In the following description, well-known functions or constructions are not described in detail since they would obscure the invention in unnecessary detail.

An apparatus and method for performing improved speech recognition in a communication device, e.g., a mobile phone, a cellular phone, a smart phone, etc., with hands-free voice dialing is provided. In some embodiments, a communication device provides a speech recognition mode. In the speech recognition mode, a user's input speech, such as a desired called party name, number or phone command, is converted to feature data. From the feature data, a sequence of likelihood vectors is derived. The components of each likelihood vector indicate the likelihood that an utterance of phonetic units occurs in the corresponding user's input speech. The sequence of likelihood vectors is compared to a number of phonetic word models. The phonetic word models correspond to entries in a phone book or phone commands, and are samples of word sub-models like phonetic units. Warping techniques may be applied by comparing likelihood vector sequences to the phonetic word models. As a result of the warping operation, word model match likelihoods for the phonetic word models are calculated, and the word model which is most similar to the input speech (referred to herein as the "best matching word model") is determined. The recognized name, number, or phone command is then synthesized from the best matching word model. After a name, number, or phone command has been synthesized, in some applications, an automatic dialing operation dialing a corresponding number, or carrying out a corresponding command, may be carried out. The direct calculation of the likelihood sequence from the input feature data and its comparison to phonetic word models that are derived from entries in, e.g., the communication device provides reliable and effective speech recognition.

Moreover, in the applied speech recognition no pre-recorded and pre-stored feature data for names to be recognized are necessary. A number of a new phone book entry may be dialed using the voice dialing function if the corresponding name is available. For example, it may be available in a written form, from which a phonetic word model may be derived.

In some embodiments, a warping operation is performed to maximize match likelihood of utterances spoken by the user and phonetic word models. The word models are phonetic representations of words to be recognized, e.g., a desired called party name, number, or a phone command. Generally, word models are divided into word sub-models, and each word sub-model is characterized by its position in the word model.

In some embodiments of the warping operation, the word model match likelihood for a word model is calculated by successively warping the sequence of likelihood vectors corresponding to an input speech to word models including sequences of word model vectors. The components of the word model vectors indicate the expectation of finding a certain sub-model at the respective position of the word model.

In one example, by means of the warping operation, an assignment of the likelihood vectors with the word model vectors is achieved. The sum of scalar products of likelihood vector and assigned word model vector is maximized, but the sequential order of both the likelihood vectors, as well as of the word model vectors are preserved. For each word under consideration, this maximized scalar vector sum is calculated as word model match likelihood. The highest word model match likelihood corresponding to the best matching word model from a name or command is synthesized, whereby a speech recognition result is obtained.

The likelihood vectors used in the recognition process may be understood as an indication of the likelihood for the phonetic units that in the input speech of the corresponding feature data these phonetic units were spoken. For the calculation of the likelihood vectors, a language specific internal representation of speech may be used which includes a likelihood distribution of the phonetic units that serve as sub-models of the phonetic word models.

In some embodiments, the phonetic likelihood distributions may be updated with regard to the characteristic of the present speaker and the environmental noise.

In some embodiments, a communication device with a voice dialing function is provided, and the communication device performs the speaker independent speech recognition.

In some embodiments, a computer program and a memory device are provided which comprise computer program code, which, when executed on a communication device, enables the communication device to carry out speaker independent speech recognition enabling, e.g., a hands-free voice dialing function of a communications device.

In some embodiments, the speech recognition techniques are used for recognizing speech signals transmitted acoustically. These speech signals come from a near end user of a communication device, e.g. a mobile phone with hands-free voice dialing function that carries out the method or contains the apparatus for performing speech recognition. Speech recognition may also be used for controlling the communication device. For example, the speech recognition techniques may be used for controlling functions of a communication device in situations where limited processing power is available. The speech recognition techniques may also be used for controlling functions of devices of, e.g., a motor vehicle, like a window winder, a radio receiver, a navigation system, a mobile phone or even to control the motor vehicle itself.

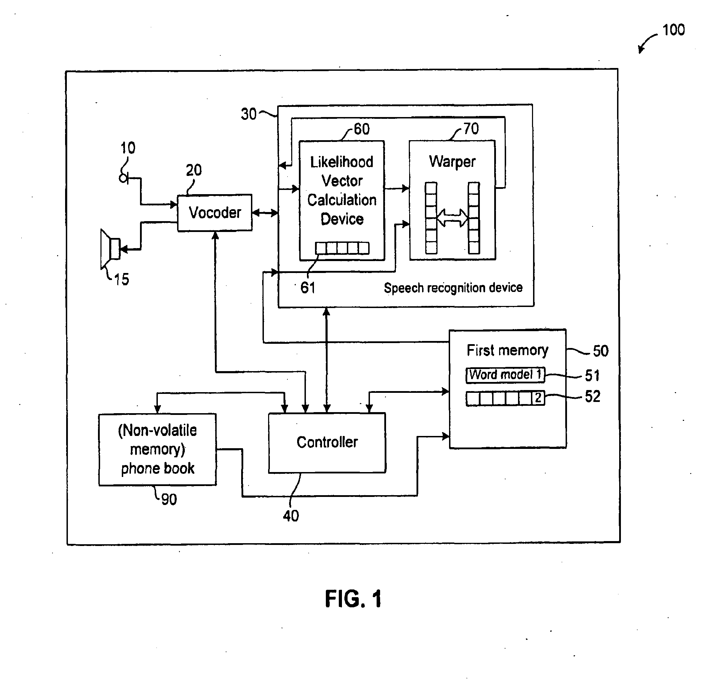

Referring now to Fig. 1, reference numeral 100 designates an apparatus for performing speech recognition as part of a communication device, such as a mobile or cellular phone. Further functional blocks typically found in conventional phones, such as a radio frequency (RF) component, dual tone multi-frequency (DTMF) component, etc., have been omitted from the Figs. for clarity of presentation. In operation, an analogue voice signal input through a microphone 10 is converted into a digital voice input signal by, e.g., an analog-to-digital (A/D) converter and a pulse code modulator (PCM) (both not shown). This digital input signal is delivered to a vocoder 20.

A controller 40, such as a microprocessor, controls the basic operations of the communications device and performs control functions, e.g., entering a speech recognition mode or dialing a number corresponding to a recognized name after a speech recognition decision and/or upon user request.

For example, after pushing a button (not shown in Fig. 1) to activate the voice recognition mode (i.e., speech recognition mode), controller 40 places communications device into the voice recognition mode. The digital input signal is then processed by vocoder 20, which divides the digital input signal in portions of equal length and extracts from these portions, so-called frames, spectral feature data. The spectral feature data is transformed into a spectral feature vector with logarithmic or non-logarithmic components, which is referred to as input feature vector. By way of example, the feature data can be 200 bytes per second and represented by spectral or cepstral parameters, signal amplitude and/or alteration of amplitude, or combinations thereof. Such feature extraction techniques are well-known in the art. Therefore, the detailed methodology by which the feature data is extracted from digital input speech and transformed into input feature vector is omitted from the present discussion.

Words to be recognized by a communications device, such as a desired called party name, number, or a phone command, are stored in a phone book 90. Phone book 90 may be implemented in a non-volatile memory, such as a flash memory or an EEPROM, etc., or a subscriber interface module (SIM) card. The phone book typically includes memory storing subscriber information including the mobile station serial number and a code indicative of the manufacture of the communications device, etc. In one example, the non-volatile memory comprises a language specific internal representation of speech, which contains likelihood distributions of phonetic units, such as phonemes or phonetic representations of the letters of the alphabet that serve as sub-models of the words to be recognized. Calculation of likelihood distributions is further described below. Briefly, likelihood distributions indicate a statistical distribution in feature space which is used as parameterization for calculating the likelihood that, in an utterance corresponding to a given feature vector, the phonetic units were spoken.

Controller 40 generates phonetic word models from the words to be recognized by using a grapheme to phoneme (G2P) translation, which is further described below. The phonetic word models are stored in a first memory 50, which may be a volatile memory, e.g., a RAM, for storing various temporary data applied during user operation of the communications device, or a non-volatile memory, e.g., similar to the one storing phone book 90.

The phonetic word models are composed of word sub-models, like phonemes, of the chosen language (i.e., phonetic units). The phonetic word model may therefore also be defined as a sequence of word model vectors in which each word model vector comprises components that indicate the expectation of finding a respective phonetic unit at the respective position of the word model. As can be seen in Fig. 1, two sequences of word model vectors 51 and 52 are depicted in first memory 50 by way of example.

In speech recognition mode, a corresponding likelihood vector is calculated for each input feature vector based on the likelihood distributions of the internal representation of the chosen language. The components of the likelihood vector indicate the likelihood that, in the feature data frame, a respective phonetic unit was spoken. Thus, the dimension of each likelihood vector corresponds to the number of phonetic units used in the chosen language.

Speech recognition is performed by a speech recognition component 30. Speech recognition component 30 comprises a likelihood vector calculation component 60, which calculates a sequence of likelihood vectors from the feature vectors input from vocoder 20. The likelihood vector sequence output from likelihood vector calculation component 60 is delivered to a warper 70 of speech recognition component 30. Warper 70 warps the likelihood vector sequence 61 with word model vector sequences 51, 52, which are made available one after another by first memory 50. The result of the warping process is an assignment of the likelihood vectors with the word model vectors. This can be done so that the sum of scalar products of likelihood vector and assigned word model vector is maximized. Also, the sequential order of both the likelihood vectors, as well as the word model vectors, is preserved. Following this, a maximized scalar vector sum is calculated for each word (i.e., phonetic word model) under consideration. The highest sum corresponds to the best matching word, and the value of the scalar vector sum denotes the matching rank order of the word model.

A principle of the warping process by the warper is that for each word model the word model match likelihood is maximized. In one example, this is done at two adjacent positions. According to the warping technique, a sequence of matching likelihood vectors which relate to constant intervals of time are compared to sub-model vectors of the respective word model. Each of this sub-model vectors indicates the distribution which may mean presence or non-presence of the respective word sub-model in a respective word model at that position. A single component of a sub-model vector at a certain position may therefore be understood as indicating the expectation of a certain word sub-model in a word model at that position. In an optimization process, the match likelihood of adjacent word sub-models is maximized by shifting the boundary between these adjacent word sub-models with respect to likelihood vectors of time frames which will be allocated to either the word sub-model at that position or the position next to it.

Additional details about the applied warping technique used to determine a best matching word model for a likelihood vector sequence is provided in European patent application by the same applicant titled "Speech Recognition Method and System" (EP application No 02012336.0, filed June 4, 2002).

Additionally, or alternatively, speech recognition device 30 may comprise a synthesizer (not shown in Fig. 1) that synthesizes a name from the best matching word model as a recognized name or command. This recognized name may then be output to notify the user that speech recognition is complete. For example, synthesized voice data of the recognized name are then supplied to vocoder 20 where the voice data is converted to a PCM signal and then provided to a digital-to-analog
(D/A) converter (not shown in Fig. 1). After conversion of the PCM signal to an analog signal in the D/A converter, the signal may be amplified into an audible signal and output through a loudspeaker 15. Thus, for example, when the user utters a called party name in the speech recognition mode of communications device 100, and speech recognition device 30 recognizes the name as corresponding to a phonetic word model of a name in phone book 90, it reports such recognition to the user. For example, this reporting can be done by reproducing the recognized name. Controller 40 may then perform automatic dialing or await a verbal confirmation command (e.g., "dial" or "yes") or push of a button by the user before proceeding to dial.

In some embodiments, speech recognition device 30 with likelihood vector calculation component 60, warper 70 and, possibly, a synthesizer may be implemented either as a set of hardware elements, a software program running on a microprocessor, e.g., controller 40, or via a combination of hardware and software. When implemented in software, the speech recognition functionality may be included within a non-volatile memory, such as a SIM card of a communications device, without a need for a separate circuit component as depicted in Fig. 1.

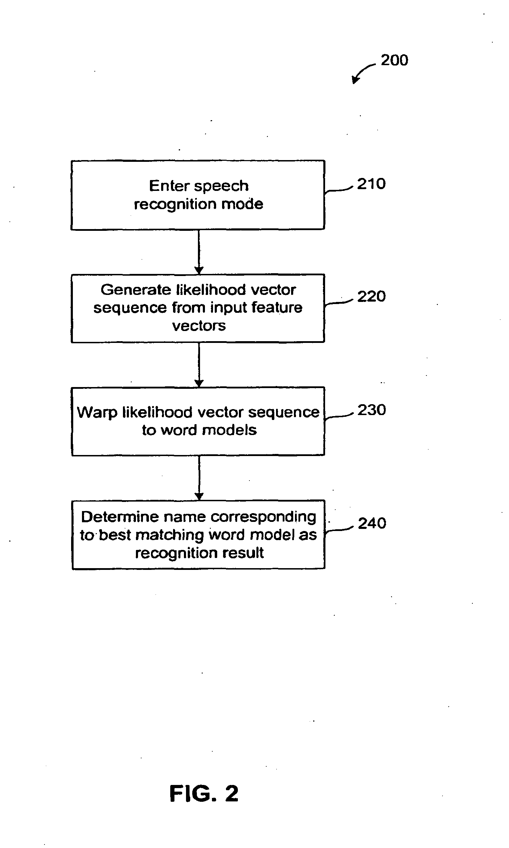

Referring now to Fig. 2, a speech recognition process 200 in a communication device with a voice dialing function is illustrated. In block 210, a speech recognition mode is entered by, e.g., pushing a key or button on the communication device, such as a communications device. For example, a user may push an appropriate key on the communications device to enter the speech recognition mode. This key input is detected by, e.g., controller 40 of communications device 100, and controller 40 enters the speech recognition mode.

In block 220, a likelihood vector sequence is generated from input feature vectors of currently recorded input feature data. Likelihood distributions of phonetic units of the chosen language are used to generate the likelihood vector sequence. For example, the language may be chosen based on the nationality of the present user. The language specific internal representation of speech providing the likelihood distributions may be transmitted to the communications device from the service provider via a mobile communication link after switching on the communications device.

In block 230, the likelihood vector sequence is compared to phonetic word models by warping the likelihood vector sequence to sequences of word model vectors. The phonetic word models can be derived from written representations of names in the communications device's phone book. For example, this can be done using a grapheme to phoneme translation based on the phonetic unit of the chosen language.

As a result of the warping operation, a best-matching word model, or a list of best-matching word models, is determined. The corresponding names to these best-matching word models are indicated by either synthesizing these names for acoustic output or displaying one or more names in likely order on a built-in display device of the communications device. The user may then select the recognized name by, e.g., pushing a button or uttering a voice command. This allows the communications device to dial a number corresponding to the recognized name.

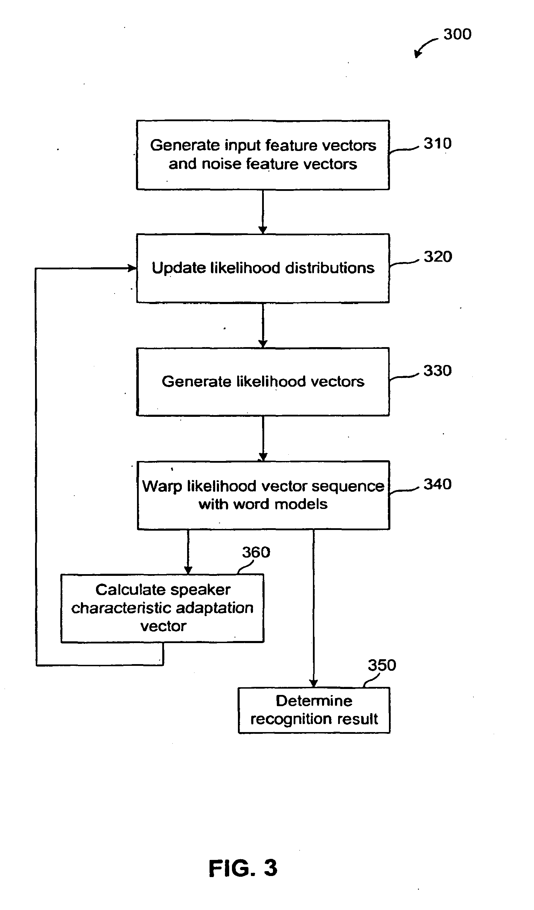

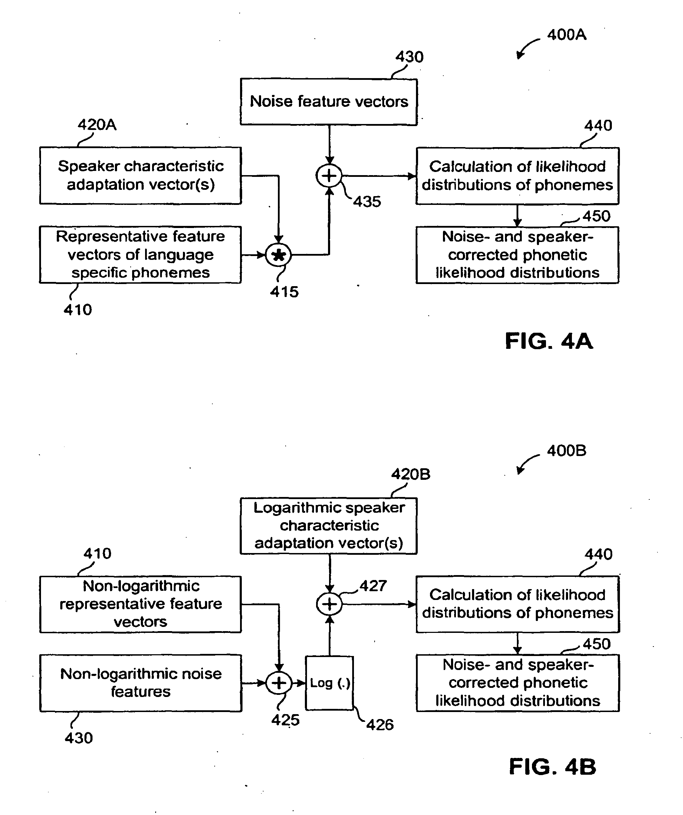

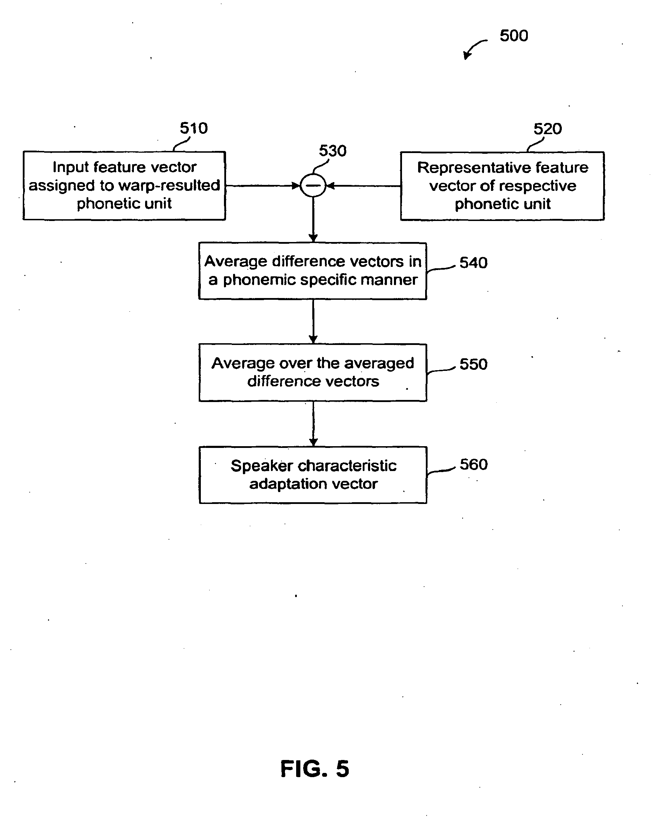

Fig. 3 illustrates a process 300 in which the likelihood distributions are updated with respect to an environmental noise level and individual speaker characteristics of the present user. The noise in the environment of the communications device and the characteristic of the present speaker may be taken into consideration by introducing additional feature vectors which are then used to update likelihood distributions, as explained with reference to Fig. 3. One vector representing the environmental noise is called noise feature vector and the other vector representing the characteristic of the present speaker is called speaker characteristic adaptation vector. Both vectors influence the internal representation of speech, as will be further explained with reference to Figs. 4A, 4B and 5.

In block 310, input feature vectors are generated from voice input in the speech recognition mode, as described above. Furthermore, in a similar manner as the input feature vector generation, noise feature vectors are also generated in block 310. The noise feature vectors may have the same spectral properties as the input feature vectors, and are generated from input feature data frames that belong to a noise input and not a voice input. The distinction between voice and noise may be based on different criteria. One criterion could be, by way of example and not limitation, that after entering the speech recognition mode, the user will not have spoken a voice input. Additionally, or alternatively, the noise feature vector may be calculated from a noise input recorded after the speech recognition mode has been entered when the radio receiver or music player has been switched off, but prior to a voice message. For example, a voice message may be "Please say the name you want to call," which can be output by the communication device. Another possible criterion may be the evaluation of the spectral power distribution of the input feature vector to decide, based on the typical distribution of a voice or a noise input, whether the present input vector is an input feature vector or a noise feature vector.

According to an embodiment, there may be provided an input feature vector generated from a corresponding voice input spoken by the present user, and a speaker characteristic adaptation vector may be used. If no speaker characteristic adaptation vector is available, a default characteristic adaptation vector may be used. In one example, all components of the default characteristic adaptation vector are equal to zero. In another example, the communication device comprises a non-volatile memory, like a SIM card, on which a speaker characteristic adaptation vector for the present user is stored, which may then be used.

In some embodiments, several speaker characteristic adaptation vectors may be stored in the communication device or may be requested, e.g., via a mobile communication link from the service provider. In this case, the user may select the most appropriate speaker characteristic adaptation vector from a list of such vectors. This list may comprise, for example, vectors for male and female users having or not having a strong accent, etc.

Both the noise feature vectors, as well as the speaker characteristic adaptation vectors, can be spectral vectors having the same dimension and spectral properties as the input feature vectors.

In block 320, likelihood distributions are updated by adapting the likelihood distributions to the current environmental noise level and the phonetic characteristics of the present user. The noise feature vectors and the speaker characteristic adaptation vector can modify the likelihood distributions in a way that the component values of the likelihood vector for one and the same feature vector can be changed to improve the recognition rate. The update operation is further described below.

In block 330, a likelihood vector sequence is generated from the current input feature vectors based on the updated likelihood distributions: In block 340, the warping operation, for example as explained above, is performed. Based on the determined best matching word model in operation, process 300 proceeds to block 350. In block 350, a recognition result is determined by selecting a name corresponding to the best-matching word model.

In another path, process 300 branches from block 340 to block 360 where the current speaker characteristic adaptation vector is calculated. This calculation operation is done based on association of respective word model vectors to the likelihood vectors performed by the warping operation (described above with reference in Fig. 1, as well as in the co-pending patent application to which is referred with regard to the warping techniques). The newly calculated speaker characteristic adaptation vector can then be used to update the likelihood distributions in a subsequent recognition cycle.

In one example, the update operation of the likelihood distributions (block 320 in process 300) is explained in more detail with reference to Figs. 4A and 4B. Phone book 90 of communication device 100 includes representative feature vectors of the phonetic units (phonemes) required in the chosen language. These representative feature vectors are spectral vectors with the same dimension and spectral properties as the input feature vectors described above (where "same spectral properties" means, in this regard, that components on the same position in these vectors represent features of the same frequency range and measured in similar amplitude reference systems).

The representative feature vectors of the phonetic units may be recorded in advance in a noise-free environment from voice samples representing the respective phonemes. By way of example, a set of 100 representative vectors for each phoneme may be sufficient, and a language may typically require not more than 50 different phonemes. Thus, around 5,000 representative feature vectors may be sufficient to define the internal representation of a chosen language.

With reference now to Fig. 4A, a process 400a is illustrated where one or more speaker characteristic adaptation vectors 420A are multiplied in operation 415 with the representative feature vectors of language specific phonemes 410. In some embodiments, multiply operation 415 functions like a mixer to mix representative feature vectors 410 with speaker characteristic adaptation vector 420A. In one example, the result of a first mixing operation 415 being so-called first modified representative feature vectors may be again mixed with speaker characteristic adaptation vectors 420A to produce further even more modified representative feature vectors. In operation 435, a noise feature vector is added to each of the first or further modified representative feature vectors. The noise feature vector may be a random sample out of a set of noise feature vectors 430 or a random sample based on an average of the noise feature vectors 430. Average of the noise feature vectors means that the components of at least some of the available noise feature vectors are averaged to produce an averaged noise feature vector used as the noise feature vector 430 in operation 435. In block 440, the calculated second modified representative feature vectors are then used to calculate likelihood distributions of the phonetic units. Resulting from this calculation are noise and speaker corrected likelihood distributions 450.

With reference now to Fig. 4B, a process 400B is illustrated where, before a user speaks a command or desired called party name, the environmental noise is recorded and processed to produce a set of noise feature vectors 430. Noise feature vectors 430, like the representative feature vectors 410, can be spectral vectors with non-logarithmic components. Each of the representative feature vectors 410 is summed with one of the noise feature vectors 430 by adding the respective components of both vectors. For example, each component of the representative feature vectors 410 is summed with a respective component of one of the noise feature vectors 430 randomly selected from the set of noise feature vectors. In another example, each component of the representative feature vectors 410 is summed with the respective component of the averaged noise feature vector. The logarithm of each component of the sum vector is taken in operation 425, and this sum vector is logarithmized in block 426. Associated with this logarithmic sum vector is a speaker characteristic representation vector 420b with logarithmic components in operation 427. As a result, a set of modified logarithmic representative feature vectors are calculated. In block 440, a statistic distribution of phonemes in the logarithmic feature space is calculated from modified logarithmic representative feature vectors through parameterization by, e.g., using a multi-dimensional Gauss fit. Assuming a Gaussian distribution one can model the noise- and speaker-corrected phonetic likelihood distributions in the feature space by a small set of parameters, i.e. the expectation values and the standard deviations in each dimension of the feature space. This parameterization represents the updated noise- and speaker- corrected phonetic likelihood distributions 450, which are also called updated phonetic likelihood distributions from which a likelihood vector, or any given logarithmic feature, like the input feature vector, may be calculated. The so updated phonetic likelihood distributions 450 may then be used in the further speech recognition process.

The noise- and speaker- corrected likelihood distributions may be considered as a set of noise- and speaker- corrected representative feature vectors, of which each representative feature vector corresponds to a respective phonetic unit. These representative feature vectors are averaged over a plurality of representative feature vectors for one specific phonetic unit like the 100 representative feature vectors for each phoneme, as mentioned above.

Referring now to Fig. 5, a process 500 illustrates the calculation of a speaker characteristic adaptation vector. Depending on the calculation of the likelihood distributions, either according to the flow diagram 400A in Fig. 4A or according to flow diagram 400B in Fig. 4B, the speaker characteristic adaptation vectors can be calculated in the form of a non-logarithmic feature vector (420A) or of a logarithmic feature vector (420B). After a recognition cycle, the assignment of best-matching word sub-model to the likelihood vectors, for example, resulting from the warping operation, is used for updating the speaker characteristic adaptation vector. Since each likelihood vector can correspond to a respective input feature vector, the best-matching word sub-model can also be assigned to these corresponding input feature vectors. This means that the voice input utterance can be divided into segments according to the input feature vectors to each of which a best-matching word sub-model is assigned as the warping result. In other words, in block 510, a phonetic unit is assigned to each input feature vector of the previous processed voice input. In difference operation 530, a difference vector is calculated for each input feature vector based on a value between a center of distribution of the assigned phonetic unit and the likelihood vector that corresponds to the before mentioned input feature vector. The difference vector is determined by calculating the difference between the respective components of the input feature vector assigned to the warp-resulted phonetic unit and the representative feature vector of the respective phonetic unit.

In one example, the center of distribution of the assigned phonetic unit is the averaged representative feature vector 520 of this respective phonetic unit.

In block 540, each of these difference vectors are then averaged in a phoneme specific manner. As a result, for each phonetic unit, based on this phonetic unit being assigned as best-matching word sub-model, an averaged difference vector is calculated. In block 550, the average over the averaged difference vectors is calculated. This average over the averaged difference vectors of pre-selected phonemes is the speaker characteristic adaptation vector 560. Thus, the speaker characteristic adaptation vector may be updated after each recognition cycle. However, an update of the speaker characteristic adaptation vector after each tenth recognition cycle may be sufficient or the speaker characteristic adaptation vector can be updated after the present user has changed.

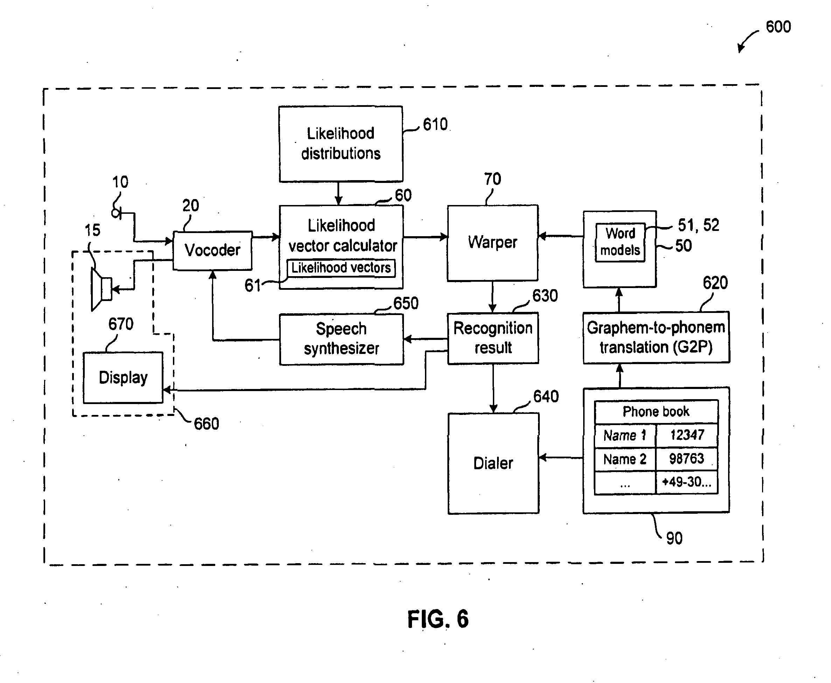

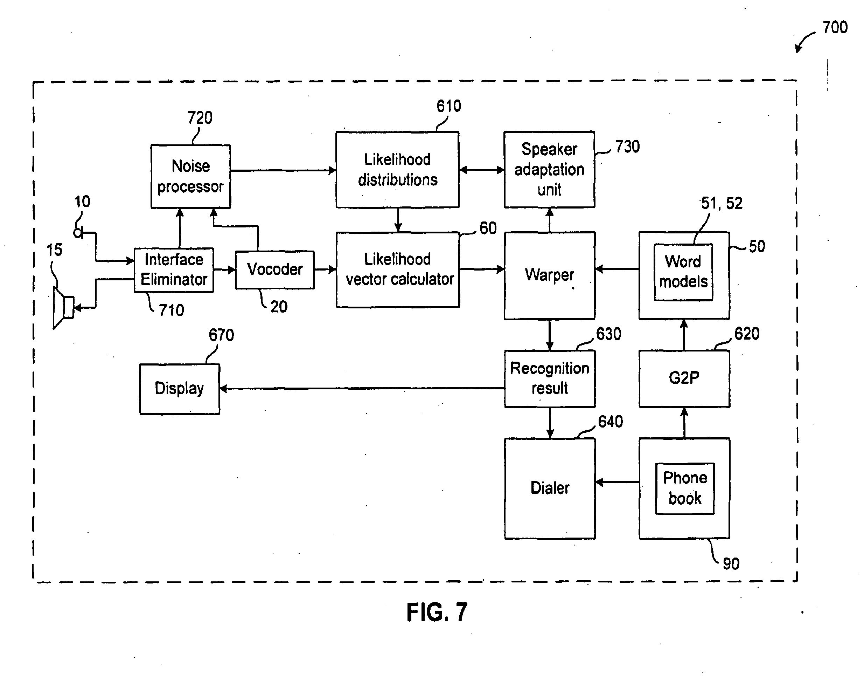

Figs. 6 and 7 depict a block diagram of a communication device configured to perform a speech recognition process according to various embodiments.. Referring first to Fig. 6, an apparatus 600 for performing speech recognition in a communication device, for example a mobile or cellular phone, with a voice dialing function is depicted. Phonetic word models 51, 52 are, for example, generated from name entries in a phone book 90 stored on, e.g., the SIM card or other memory of the communications device. This phonetic word model calculation done to generate word models 51, 52 can be done by using a grapheme-to-phoneme translation (G2P) 620 and may be performed as a text to speech transformation of the names stored in the phone book. In translation or transformation operation 620, phonetic units of a chosen language may be used as word sub-models from which the phonetic word models can be assembled. For example, there are different G2P-translators that work in a rule based manner or simply replace a letter or letter combination in the name under consideration by a phonetic unit for this letter or letter combination. Word models 51, 52 may be stored in memory 50, which is, e.g., a RAM memory of the communications device or another portion on SIM card.

The speech recognition mode is entered, e.g., after the user has pushed a button. According to further embodiments and depending on the communication device, the speech recognition mode can be entered via other modes and/or commands as well, for example by a controller (not shown in Fig. 6) detecting a corresponding request issued by the user. In one example, the communications device outputs a spoken command through built-in loudspeaker 15. The spoken command can be, for example "please say the name you want to call," prompting the user to say the name he or she wants to call. The name spoken by the user is then recorded by microphone 10 as voice input and transmitted to vocoder 20. Vocoder 20 calculates input feature vectors from the voice input and transmits these input feature vectors to likelihood vector calculation component 60. Based on likelihood distributions 610, likelihood vector calculation component 60 calculates likelihood vector sequence 61 from the input feature vectors. Likelihood vector sequence 61 is then warped by warper 70 to produce word models 51, 52 stored in memory 50. In the warping operation, word model match likelihoods for the word models under consideration are calculated. The word model match likelihoods are brought into respective order with the highest word model match likelihood on top. The recognition result is then the best-matching word model for which the highest word model match likelihood has been calculated. According to another embodiment, as the recognition result a list of best-matching word models may be presented.

The recognition result can be transmitted to a speech synthesizer 650, which synthesizes one or more best-matching names corresponding to the best-matching word models for acoustic output through loudspeaker 15. According to another example, the recognition result may be presented to the user by displaying one or more best-matching names in order corresponding to the best-matching word models on a display 670 of communication device 600. In other words, the recognition result may be presented to the user using a built-in or separate output device 660.

Additionally, or alternatively, the user may then select a name from the list of best-matching names, or just confirm that the one best-matching word is the name of a person he wants to call. In one example, the selection of the user is highlighted on the display 670 and/or is output as a synthesized word through the loudspeaker 15. The user may then change the word selection by a spoken command and/or scroll button hits, and a newly selected word is then highlighted or acoustically outputted as a synthesized word. To confirm that the selected word is the name of the person the user wants to call, the user may speak a command such as "dial" or "yes", or push a respective button on the communications device. The spoken command may be recognized in the same manner as the voice input of a spoken name by using word models in the warping operation generated from a list of communications device commands available in the communication device.

After the confirmation by the user, a dialer 640 dials a number that corresponds to the selected name and the voice recognition mode is exit, for example, by the controller (not shown in Fig. 6).

In some embodiments, the communication device may also automatically dial a number corresponding to the best-matching word model without presenting the recognition result to the user or just after the recognition result has been presented. For example, this can be done by outputting a respective synthesized word by the speech synthesizer 650 and dialing the corresponding number according. In one example, the corresponding number is dialed by the dialer 640 at the same time or briefly after the recognition result has been presented to the user. If the user then recognizes that the synthesized word output by the speech synthesizer 650 or by the display 670 is not correct or not the one the user intended to dial, the user may interrupt the dialing process, for example, by pressing a respective key relating to the communication device.

Referring to Fig. 7, an apparatus 700 for performing speech recognition in a communication device with a voice dialing function is depicted. Apparatus 700 is similar to apparatus 600 depicted in Fig. 6, except, in apparatus 700, likelihood distributions 610 are updated based on speaker characteristic and noise as explained, for example, with respect to operation 320 above. Furthermore, apparatus 700 does not contain speech synthesizer 650 as depicted in Fig. 6. Accordingly, recognition result 630 may be presented to the user as one or more names in an order most likely to be the correct results, which is displayed on built-in display 670.

Referring again to Fig. 7, after entering the speech recognition mode, the communications device can output a spoken command through the loudspeaker 15 to prompt the user to say a name the user wants to call. In the hands-free operation mode of the communications device, loudspeaker interference is removed from the input signal recorded by microphone 10 by using an interference eliminator 710. Interference eliminator 710 performs echo cancellation and removes the spoken command output through the loudspeaker from the input signal detected by microphone 10 so that the environmental noise may be recorded when the loudspeaker 15 is in use without the spoken command as environmental noise. Since the environmental noise is recorded while a spoken command is output by the communications device to which the user is listening, there is a high probability that during that time the user is not speaking, so that a pure noise signal may be recorded by microphone 10. A noise processor 720 may calculate a set of noise feature vectors from the recorded noise signal.

In some embodiments, the noise feature vectors may also be calculated by vocoder 20 from a recorded noise input and then transmitted to noise processor 720, which calculates an averaged noise feature vector which is further used in the recognition process. In communications device 700, likelihood distributions 610 can be updated using the noise feature vectors that are provided from noise processor 720 and based on the characteristic of the present speaker provided by speaker adaptation unit 730. The details of the updating process have been described above with reference to Figs. 3, 4A, 4B and 5. In speaker adaptation unit 730, the speaker characteristic adaptation vectors may be calculated from the sub-model assignment to the likelihood vectors provided by the warper 70 resulting from the warping operation. Thus, likelihood distributions 610 are updated by the recognition result of previously recorded utterance in order to continually improve the following recognition results.

One skilled in the art will appreciate that the function blocks depicted in Figs. 1, 6, and 7 may be combined in any meaningful combination.

The various embodiments described above allow for sufficient speech recognition without the need for a registration process in which feature data of words to be recognized have to be recorded and pre-stored. Furthermore, the various embodiments described are suitable to reduce the rate of recognition error in a voice dial mode of a communication device by utilizing the environmental noise and the characteristic of the present speaker and, further decrease the probability of missed voice recognition. Moreover, the various embodiments described are able to easily adapt to different languages by utilizing phonetic units and their likelihood distributions as an interval representation of the chosen language and their recognition process and are able to recognize new words for which only a written representation and no phonetic feature data are available, for example, as a phone book entry.

According to a further embodiment, a computer program product is provided which comprises a computer usable medium having a computer program logic recorded thereon for controlling at least one processor. The computer program logic comprises computer program code means for entering a speech recognition mode, computer program code means for generating input feature vectors from voice input upon receipt of a voice input in the speech recognition mode, computer program code means for calculating a likelihood vector sequence from the input feature vectors indicating a likelihood in time of an utterance of phonetic units, computer program code means for warping the likelihood vector sequence to phonetic word models, computer program code means for calculating word model match likelihoods from the phonetic word models, and computer program code means for determining a best matching one of the word model match as recognition result.

According to another embodiment, a memory device is provided which comprises computer program code which when executed on a communication device enables the communication device to carry out a method comprising the steps entering a speech recognition mode, upon receipt of a voice input in the speech recognition mode, generating input feature vectors from voice input, calculating a likelihood vector sequence from the input feature vectors indicating a likelihood in time of an utterance of phonetic units, warping the likelihood vector sequence to phonetic word models, calculating word model match likelihoods from the phonetic word models, and determining a best matching one of the word model match as recognition result.

Moreover, according to another embodiment a computer-readable medium is provided which contains instructions for controlling at leas one processor of a communication device. The instructions enable the communication device to carry out a method comprising entering a speech recognition mode, upon receipt of a voice input in the speech recognition mode, generating input feature vectors from voice input, calculating a likelihood vector sequence from the input feature vectors indicating a likelihood in time of an utterance of phonetic units, warping the likelihood vector sequence to phonetic word models, calculating word model match likelihoods from the phonetic word models, and determining a best matching one of the word model match as recognition result.

### Conclusion

While various embodiments of the present invention have been described above, it should be understood that they have been presented by way of example only, and not limitation. It will be apparent to persons skilled in the relevant art that various changes in form and detail can be made therein without departing from the scope of the invention. Thus, the breadth and scope of the present invention should not be limited by any of the above-described exemplary embodiments, but should be defined only in accordance with the following claims and their equivalents.

It is to be appreciated that the Detailed Description section, and not the Summary and Abstract sections, is intended to be used to interpret the claims. The Summary and Abstract sections can set forth one or more, but not all exemplary embodiments of the present invention as contemplated by the inventor(s), and thus are not intended to limit the present invention and the appended claims in any way.

## Claims

1. A method for performing speech recognition in a communication device with a voice dialing function, comprising:
a) entering (210) a speech recognition mode;
b) upon receipt of a voice input in the speech recognition mode, generating input spectral feature vectors from voice input;
c) calculating (220) a likelihood vector sequence from the input spectral feature vectors indicating a likelihood in time of an utterance of phonetic units;
d) warping (230) the likelihood vector sequence to phonetic word models (51);
e) calculating word model match likelihoods from the phonetic word models (51); and
f) determining (240) a best matching one of the word model match as recognition result;
**characterized in that** each of the likelihood vectors is calculated from a respective input spectral feature vector using a stored representation of a chosen language that includes likelihood distributions calculated from representative ones of the spectral feature vectors of the phonetic units indicating a statistic distribution of the representative spectral feature vectors in feature space.

2. The method of claim 1, wherein the phonetic units serve as word sub-models for the phonetic word models (51), each of the phonetic word models (51) includes a sequence of word model vectors, and a component of the word model vector indicates an expectation of finding a respective one of the phonetic units at a respective position of the phonetic word model.

3. The method of claim 1, wherein the calculation of the likelihood distributions is carried out in a registration mode, comprising:
recording of voice input samples spoken by different speakers in a noise free environment;
selecting parts of the voice input samples corresponding to the phonetic units required in the chosen language; and
generating of the representative spectral feature vectors from the selected parts.

4. The method of claim 1, further comprising:
determining a speaker characteristic adaptation vector for the present user and updating the likelihood distributions by reflecting the speaker characteristic adaptation vector into the representative spectral feature vectors.

5. The method of claim 1 or 4, further comprising:
measuring noise in the communication device environment;
processing (330) a noise feature vector from the measured noise; and
updating the likelihood distributions by associating the noise feature vector into the representative spectral feature vectors.

6. The method of claim 5 when dependent upon claim 4, wherein the noise feature vector and the speaker characteristic adaptation vector are spectral vectors, and updating the likelihood distributions comprises:
multiplying (415) the speaker characteristic adaptation vector with each of the representative spectral feature vectors to generate first modified representative spectral feature vectors;
adding (435) to the first modified representative spectral feature vectors to the noise feature vector to generate second modified representative spectral feature vectors; and
determining a statistical distribution of the second modified representative spectral feature vectors in feature space as updated likelihood distributions.

7. The method of claim 5 when dependent upon claim 4, wherein the noise feature vector and the speaker characteristic adaptation vector are spectral vectors, the noise feature vector and the representative spectral feature vectors have non-logarithmic components, and the input spectral feature vectors and the speaker characteristic adaptation vector have logarithmic components, and updating the likelihood distribution comprises:
adding (425) each of the representative spectral feature vectors with the noise feature vector to generate first modified representative spectral feature vectors;
logarithmizing (426) each component of the first modified representative spectral feature vectors;
adding (427) to the first modified and logarithmized representative spectral feature vectors the speaker characteristic adaptation vector to generate second modified representative spectral feature vectors; and
determining a statistical distribution of the second modified representative spectral feature vectors in feature space as likelihood distribution.

8. The method of claim 5 when dependent upon claim 4, wherein determining of the speaker characteristic adaptation vector comprises calculation of a speaker characteristic adaptation vector for each the representative spectral feature vectors, further comprising:
assigning a best matching phonetic unit to each of the input spectral feature vectors;
calculating (530) a difference vector between each of the input spectral feature vectors and the respective representative spectral feature vector; and
calculating (550) a phoneme specific averaged difference vector as speaker characteristic adaptation vector for each of the respective representative spectral feature vectors.

9. The method of claim 8, wherein the speaker characteristic adaptation vector is averaged over the phoneme specific averaged difference vectors.

10. The method of claim 1, further comprising:
synthesizing a name from the best matching word model and dialing a number corresponding to that name.

11. The method of claim 1, wherein the phonetic word models (51) are generated from names in a phone book as sequences of the word sub-models using a graphem-to-phonem translation.

12. An apparatus (100) for performing speech recognition in a communication device with a voice dialing function, comprising:
a first memory (50) configured to store word models of names in a phone book;
a vocoder (20) configured to generate input spectral feature vectors from a voice input in a speech recognition mode;
a speech recognition device (30) including (a) a likelihood vector calculation device (60) configured to calculate a likelihood vector sequence from the input spectral feature vectors indicating a likelihood in time of an utterance of phonetic units, (b) a warper (70) configured to warp the likelihood vector sequence to the word models, (c) a calculation device configured to calculate word model match likelihoods from the word models, and (d) a determining device configured to determine a best matching word model as a recognition result; and
a controller (40) configured to initiate the speech recognition mode;
**characterized in that** the likelihood vector calculation device (60) is configured to calculate each of the likelihood vectors from a respective input spectral feature vector using a stored representation of a chosen language that includes likelihood distributions calculated from representative ones of the spectral feature vectors of the phonetic units indicating a statistic distribution of the representative spectral feature vectors in feature space.

13. The apparatus (100) of claim 12, further comprising:
a microphone (10) configured to record the voice input and environmental noise as noise input;
wherein the vocoder (20) is configured to process a noise feature vector from the noise input; and
wherein the speech recognition device (30) is configured to update the likelihood distribution by reflecting the noise feature vector in the representative spectral feature vectors.

14. The apparatus (100) of claim 12 or 13, further comprising:
a speaker characteristic adaptation device configured to determine a speaker characteristic adaptation vector for the present user and to update the likelihood distribution by reflecting the speaker characteristic adaptation vector in the representative spectral feature vectors.

15. The apparatus (100) of claim 14 when dependent on claim 13, wherein the noise feature vector and the speaker characteristic adaptation vector are spectral vectors and the speaker characteristic adaptation device is configured to update the likelihood distribution by:
multiplying the speaker characteristic adaptation vector with each of the representative spectral feature vectors to generate first modified representative spectral feature vectors;
adding to the first modified representative spectral feature vectors the noise feature vector to generate second modified representative spectral feature vectors; and
determining a statistical distribution of the second modified representative spectral feature vectors in feature space as likelihood distribution.

16. The apparatus (100) of claim 14, wherein the speaker characteristic adaptation device is configured to determine or update the speaker characteristic adaptation vector by:
assigning a best matching phonetic unit to each of the input spectral feature vectors;
calculating a difference vector between each of the input spectral feature vectors and the respective representative spectral feature vector;
averaging over the difference vectors per phonetic unit and generating a phoneme specific averaged difference vector; and
averaging over the phoneme specific averaged difference vectors.

17. The apparatus (100) of claim 12, further comprising:
a synthesizer configured to synthesize a name from the best matching word model; and
wherein the controller (40) is configured to dial a number in the phone book corresponding to the name synthesized from the best matching word model.

18. The apparatus (100) as claimed in claim 17, wherein:
the warper (70) is configured to determine a list of best matching word models;
the synthesizer is configured to synthesize a name for each of the best matching word models in the list;
the apparatus (100) further comprises:
an output device configured to output the synthesized names; and
a selecting device configured to select one of the output names by the user; and
the controller (40) is configured to dial the number in the phone book corresponding to the selected name.

19. The apparatus (100) as claimed in claim 18, wherein:
the output device comprises a loudspeaker (15) of the communication device that outputs control commands from the controller (40);
the microphone (10) is configured to record the environmental noise while the loudspeaker is outputting; and
the apparatus (100) further comprises, an interference elimination device configured to remove the loudspeaker interference from the recorded noise to generate a noise input.

20. A computer program comprising computer program code, which when executed on a communication device enables the communication device to carry out a method according to one of claims 1 - 11.

## Patentansprüche

1. Verfahren zur Ausführung von Spracherkennung in einem Kommunikationsgerät mit einer Sprech-Wähl-Funktion, umfassend:
a) Eingeben (210) eines Spracherkennungsmodus;
b) nach Eingang einer Spracheingabe in den Spracherkennungsmodus Erzeugung von Eingabe-Spektral-Merkmals-Vektoren aus der Spracheingabe;
c) Berechnung (220) einer Wahrscheinlichkeits-Vektor-Sequenz aus den Eingabe-Spektral-Merkmals-Vektoren, die eine Wahrscheinlichkeit hinsichtlich der Zeit einer Äußerung bzw. Aussprache von phonetischen Einheiten anzeigt;
d) Warping (230) der Wahrscheinlichkeits-Vektor-Sequenz auf phonetische Wortmodelle (51);
e) Berechnung von Wortmodell-Übereinstimmungs-Wahrscheinlichkeiten aus den phonetischen Wortmodellen (51); und
f) Ermitteln (240) der besten Übereinstimmung der Wortmodell-Übereinstimmung als Erkennungsergebnis;
**dadurch gekennzeichnet, dass** jeder der Wahrscheinlichkeits-Vektoren aus einem jeweiligen Eingabe-Spektral-Merkmals-Vektor berechnet wird unter Verwendung einer gespeicherten Darstellung einer gewählten Sprache, welche Wahrscheinlichkeits-Verteilungen, berechnet aus Repräsentativen von den Spektral-Merkmals-Vektoren der phonetischen Einheiten, einschließt, welche eine statistische Verteilung von den repräsentativen Spektral-Merkmals-Vektoren im Merkmals-Raum anzeigen.

2. Verfahren nach Anspruch 1, wobei die phonetischen Einheiten als Wort-Untermodelle für die phonetischen Wort-Modelle (51) dienen, jedes der phonetischen Wort-Modelle (51) eine Sequenz von Wort-Modell-Vektoren einschließt und eine Komponente von dem Wort-Modell-Vektor eine Erwartung für das Auffinden einer Repräsentativen von den phonetischen Einheiten bei einer jeweiligen Position des phonetischen Wort-Modells anzeigt.

3. Verfahren nach Anspruch 1, wobei die Berechnung der Wahrscheinlichkeitsverteilungen in einem Registrierungs-Modus ausgeführt wird, umfassend:
Aufzeichnen von Sprach-Eingabe-Proben, gesprochen von unterschiedlichen Sprechern in einer Geräusch-freien Umgebung;
Auswählen von Teilen der Sprach-Eingabe-Proben, entsprechend den phonetischen Einheiten, die in der gewählten Sprache erforderlich sind; und
Erzeugen von repräsentativen Spektral-Merkmals-Vektoren aus den ausgewählten Teilen.

4. Verfahren nach Anspruch 1, außerdem umfassend:
Ermitteln eines Sprecher-charakteristischen Anpassungs-Vektors für den gegenwärtigen Benutzer und Aktualisieren der Wahrscheinlichkeits-Verteilungen durch Reflektieren des Sprecher-charakteristischen Anpassungs-Vektors in den repräsentativen Spektral-Merkmals-Vektoren.

5. Verfahren nach Anspruch 1 oder 4, außerdem umfassend:
Messen von Geräusch in der Kommunikations-Geräte-Umgebung;
Verarbeiten (330) eines Geräusch-Merkmals-Vektors aus dem gemessenen Geräusch; und
Aktualisieren der Wahrscheinlichkeits-Verteilungen durch Assoziieren des Geräusch-Merkmals-Vektors in den repräsentativen Spektral-Merkmals-Vektoren.

6. Verfahren nach Anspruch 5, sofern abhängig von Anspruch 4, wobei der Geräusch-Merkmals-Vektor und der Sprecher-charakteristische Anpassungs-Vektor Spektral-Vektoren sind und Aktualisieren der Wahrscheinlichkeits-Verteilungen umfasst:
Multiplizieren (415) des Sprecher-charakteristischen Anpassungs-Vektors mit jedem der repräsentativen Spektral-Merkmals-Vektoren zur Erzeugung erster modifizierter repräsentativer Spektral-Merkmals-Vektoren;
Addieren (435) des Geräusch-Merkmals-Vektors zu den ersten modifizierten repräsentativen Spektral-Merkmals-Vektoren zur Erzeugung von zweiten modifizierten repräsentativen Spektral-Merkmals-Vektoren; und
Ermitteln einer statistischen Verteilung von den zweiten modifizierten repräsentativen Spektral-Merkmals-Vektoren im Merkmals-Raum als aktualisierte Wahrscheinlichkeits-Verteilungen.

7. Verfahren nach Anspruch 5, sofern abhängig von Anspruch 4, wobei der Geräusch-Merkmals-Vektor und der Sprecher-charakteristische Anpassungs-Vektor Spektral-Vektoren sind, der Geräusch-Merkmals-Vektor und die repräsentativen Spektral-Merkmals-Vektoren nicht-logarithmische Komponenten aufweise und die Eingabe-Spektral-Merkmals-Vektoren und der Sprecher-charakteristische Anpassungs-Vektor logarithmische Komponenten aufweisen und Aktualisieren der Wahrscheinlichkeits-Verteilung umfasst:
Addieren (425) von jedem der repräsentativen Spektral-Merkmals-Vektoren mit dem Geräusch-Merkmals-Vektor zur Erzeugung von ersten modifizierten repräsentativen Spektral-Merkmals-Vektoren;
Logarithmieren (426) von jeder Komponente von den ersten modifizierten repräsentativen Spektral-Merkmals-Vektoren;
Addieren (427) des Sprecher-charakteristischen Anpassungs-Vektors zu den ersten modifizierten und logarithmierten repräsentativen Spektral-Merkmals-Vektoren zur Erzeugung von zweiten modifizierten repräsentativen Spektral-Merkmals-Vektoren; und
Ermitteln einer statistischen Verteilung von den zweiten modifizierten repräsentativen Spektral-Merkmals-Vektoren im Merkmals-Raum als Wahrscheinlichkeits-Verteilung.

8. Verfahren nach Anspruch 5, sofern abhängig von Anspruch 4, wobei Ermitteln des Sprecher-charakteristischen Anpassungs-Vektors Berechnen eines Sprecher-charakteristischen Anpassungs-Vektors für jeden der repräsentativen Spektral-Merkmals-Vektoren umfasst, außerdem umfassend:
Zuordnen einer am besten passenden bzw. übereinstimmenden phonetischen Einheit zu jedem der Eingabe-Spektral-Merkmals-Vektoren;
Berechnen (530) eines Differenz-Vektors zwischen jedem der Eingabe-Spektral-Merkmals-Vektoren und dem entsprechenden repräsentativen Spektral-Merkmals-Vektor; und
Berechnen (550) eines Phonem-spezifischen gemittelten Differenz-Vektors als Sprecher-charakteristischen Anpassungs-Vektor für jeden der jeweiligen der repräsentativen Spektral-Merkmals-Vektoren.

9. Verfahren nach Anspruch 8, wobei der Sprecher-charakteristische Anpassungs-Vektor über die Phonem-spezifischen gemittelten Differenz-Vektoren gemittelt wird.

10. Verfahren nach Anspruch 1, außerdem umfassend:
Synthetisieren eines Namens für das am besten passende Wort-Modell und Wählen einer Nummer entsprechend dem Namen.

11. Verfahren nach Anspruch 1, wobei die phonetischen Wort-Modelle (51) aus den Namen eines Telefonbuchs als Sequenzen von Wort-Untermodellen unter Verwendung einer Graphem-zu-Phonem-Übersetzung erzeugt werden.

12. Vorrichtung (100) zur Ausführung von Spracherkennung in einem Kommunikationsgerät mit einer Sprech-Wähl-Funktion, umfassend:
einen ersten Speicher (50), konfiguriert zum Speichern von Wort-Modellen von Namen in einem Telefonbuch;
einen Vocoder (20), konfiguriert zur Erzeugung von Eingabe-Spektral-Merkmals-Vektoren aus einer Sprach-Eingabe in einem Sprach-Erkennungs-Modus;
eine Spracherkennungs-Vorrichtung (30), einschließlich (a) einer Wahrscheinlichkeits-Vektor-Berechnungs-Vorrichtung (60), konfiguriert zum Berechnen einer Wahrscheinlichkeits-Vektor-Sequenz aus Eingabe-Spektral-Merkmals-Vektoren, die eine Wahrscheinlichkeit hinsichtlich der Zeit von einer Äußerung bzw. Aussprache von phonetischen Einheiten anzeigt, (b) einen Warper (70), konfiguriert zum Warpen der Wahrscheinlichkeits-Vektor-Sequenz zu den Wort-Modellen, (c) eine Berechnungs-Vorrichtung, konfiguriert zum Berechnen von Wort-Modell-Übereinstimmungs-Wahrscheinlichkeiten aus den Wort-Modellen und (d) eine Bestimmungs-Vorrichtung, konfiguriert zum Ermitteln des am besten passenden bzw. übereinstimmenden Wort-Modells als Erkennungs-Ergebnis; und
einen Controller (40), konfiguriert zum Starten des Spracherkennungs-Modus;
**dadurch gekennzeichnet, dass** die Wahrscheinlichkeits-Vektor-Berechnungs-Vorrichtung (60) konfiguriert ist zum Berechnen von jedem der Wahrscheinlichkeits-Vektoren aus einem jeweiligen Eingabe-Spektral-Merkmals-Vektor unter Verwendung einer gespeicherten Darstellung von einer gewählten Sprache, die Wahrscheinlichkeits-Verteilungen einschließt, berechnet aus Repräsentativen von den Spektral-Merkmals-Vektoren der phonetischen Einheiten, die eine statistische Verteilung der repräsentativen Spektral-Merkmals-Vektoren im Merkmals-Raum anzeigen.

13. Vorrichtung (100) nach Anspruch 12, außerdem umfassend:
ein Mikrophon (10), konfiguriert zum Aufzeichnen einer Sprach-Eingabe und von Umgebungs-Geräusch als Geräusch-Eingabe;
wobei der Vocoder (20) konfiguriert ist zur Verarbeitung eines Geräusch-Merkmals-Vektors aus der Geräusch-Eingabe; und
wobei die Sprach-Erkennungs-Vorrichtung (30) konfiguriert ist zur Aktualisierung der Wahrscheinlichkeits-Verteilung durch Reflektieren des Geräusch-Merkmals-Vektors in den repräsentativen Spektral-Merkmals-Vektoren.

14. Vorrichtung (100) nach Anspruch 12 oder 13, außerdem umfassend:
eine Sprecher-charakteristische Anpassungs-Vorrichtung, konfiguriert zur Ermittlung eines Sprecher-charakteristischen Anpassungs-Vektors für den vorliegenden Benutzer und zum Aktualisieren der Wahrscheinlichkeits-Verteilung durch Reflektieren des Sprecher-charakteristischen Anpassungs-Vektors in den repräsentativen Spektral-Merkmals-Vektoren.

15. Vorrichtung (100) nach Anspruch 14, sofern abhängig von Anspruch 13, wobei der Geräusch-Merkmals-Vektor und der Sprecher-charakteristische Anpassungs-Vektor Spektral-Vektoren darstellen und die Sprecher-charakteristische Anpassungs-Vorrichtung konfiguriert ist zum Aktualisieren der Wahrscheinlichkeits-Verteilung durch:
Multiplizieren des Sprecher-charakteristischen Anpassungs-Vektors mit jedem der repräsentativen Spektral-Merkmals-Vektoren zum Erzeugen von ersten modifizierten repräsentativen Spektral-Merkmals-Vektoren;
Addieren des Geräusch-Merkmals-Vektors zu den ersten modifizierten repräsentativen Spektral-Merkmals-Vektoren zur Erzeugung von zweiten modifizierten repräsentativen Spektral-Merkmals-Vektoren; und
Ermitteln einer statistischen Verteilung von den zweiten modifizierten repräsentativen Spektral-Merkmals-Vektoren im Merkmals-Raum als Wahrscheinlichkeits-Verteilung.

16. Vorrichtung (100) nach Anspruch 14, wobei die Sprecher-charakteristische Anpassungs-Vorrichtung konfiguriert ist zur Bestimmung oder zur Aktualisierung des Sprecher-charakteristischen Anpassungs-Vektors durch:
Zuordnen einer am besten passenden bzw. übereinstimmenden phonetischen Einheit zu jedem der Eingabe-Spektral-Merkmals-Vektoren;
Berechnen eines Differenz-Vektors zwischen jedem der Eingabe-Spektral Merkmals-Vektoren und dem jeweiligen repräsentativen Spektral-Merkmals-Vektor;
Mitteln über die Differenz-Vektoren pro phonetischer Einheit und Erzeugen eines Phonem-spezifischen gemittelten Differenz-Vektors; und
Mitteln über die Phonem-spezifischen gemittelten Differenz-Vektoren.

17. Vorrichtung (100) nach Anspruch 12, außerdem umfassend:
einen Synthesizer, konfiguriert zum Synthetisieren eines Namens für das am besten passende Wort-Modell; und
wobei der Controller (40) konfiguriert ist zum Wählen einer Nummer in dem Telefonbuch entsprechend dem Namen, der aus dem am besten passenden bzw. übereinstimmenden Wort-Modell synthetisiert wurde.

18. Vorrichtung (100) nach Anspruch 17, wobei:
der Warper (70) konfiguriert ist zum Ermitteln einer Liste von am besten passenden bzw. übereinstimmenden Wort-Modellen;
der Synthesizer konfiguriert ist zum Synthetisieren eines Namens für jedes von den am besten passenden bzw. übereinstimmenden Wort-Modellen in der Liste;
die Vorrichtung (100) außerdem umfasst:
eine Ausgabe-Vorrichtung, konfiguriert zum Ausgeben der synthetisierten Namen; und
eine Auswahl-Vorrichtung, konfiguriert zum Auswählen von einem der Ausgabe-Namen durch den Benutzer; und
der Controller (40) konfiguriert ist zum Wählen der Nummer in dem Telefonbuch entsprechend dem ausgewählten Namen.

19. Vorrichtung (100) nach Anspruch 18, wobei:
die Ausgabe-Vorrichtung einen Lautsprecher (15) der Kommunikations-Vorrichtung umfasst, welcher Steuer-Kommandos von dem Controller (40) ausgibt;
das Mikrofon (10) konfiguriert ist zum Aufzeichnen des Umgebungs-Geräusches während der Lautsprecher ausgibt; und
die Vorrichtung (100) außerdem eine Interferenz-Beseitigungs-Vorrichtung, konfiguriert zum Entfernen der Lautsprecher-Interferenz aus dem aufgezeichneten Geräusch zum Erzeugen einer Geräusch-Eingabe, umfasst.

20. Computer-Programm, umfassend einen Computer-Programm-Code, welcher, wenn auf einem Kommunikations-Gerät ausgeführt, es dem Kommunikations-Gerät ermöglicht, ein Verfahren nach einem der Ansprüche 1 - 11 auszuführen.

## Revendications

1. Procédé pour réaliser une reconnaissance vocale dans un dispositif de communication ayant une fonction de composition vocale, comprenant les étapes consistant à :
a) entrer (210) dans un mode de reconnaissance vocale ;
b) lors de la réception d'une entrée vocale dans le mode de reconnaissance vocale, générer des vecteurs d'attribut spectral d'entrée à partir de l'entrée vocale ;
c) calculer (220) une séquence de vecteur de vraisemblance à partir des vecteurs d'attribut spectral d'entrée indiquant une vraisemblance dans le temps d'une énonciation d'unités phonétiques ;
d) déformer (230) la séquence de vecteur de vraisemblance en modèles de mot phonétique (51) ;
e) calculer des vraisemblances de concordance de modèle de mot à partir des modèles de mot phonétique (51) ; et
f) déterminer (240) la meilleure concordance des concordances de modèle de mot en tant que résultat de reconnaissance ;
**caractérisé en ce que** chacun des vecteurs de vraisemblance est calculé à partir d'un vecteur d'attribut spectral d'entrée respectif en utilisant une représentation mémorisée d'une langue choisie qui inclut des distributions de vraisemblance calculées à partir de vecteurs représentatifs parmi les vecteurs d'attribut spectral des unités phonétiques indiquant une distribution statistique des vecteurs d'attribut spectral représentatifs dans l'espace des attributs.

2. Procédé selon la revendication 1, dans lequel les unités phonétiques servent de sous-modèles de mot pour des modèles de mot phonétique (51), chacun des modèles de mot phonétique (51) inclut une séquence de vecteurs de modèle de mot, et une composante du vecteur de modèle de mot indique une espérance de trouver une unité respective parmi les unités phonétiques à une position respective du modèle de mot phonétique.

3. Procédé selon la revendication 1, dans lequel le calcul des distributions de vraisemblance est réalisé dans un mode d'inscription, comprenant les étapes consistant à :
enregistrer des échantillons d'entrée vocale prononcés par différents interlocuteurs dans un environnement dépourvu de bruit ;
sélectionner des partie des échantillons d'entrée vocale correspondant aux unités phonétiques requises dans la langue choisie ; et
générer les vecteurs d'attribut spectral représentatifs à partir des parties sélectionnées.

4. Procédé selon la revendication 1, comprenant en outre l'étape consistant à :
déterminer un vecteur d'adaptation caractéristique d'interlocuteur pour le présent utilisateur et mettre à jour des distributions de vraisemblance en reflétant le vecteur d'adaptation caractéristique d'interlocuteur dans les vecteurs d'attribut spectral représentatifs.

5. Procédé selon la revendication 1 ou 4, comprenant en outre les étapes consistant à :
mesurer le bruit dans l'environnement du dispositif de communication ;
traiter (330) un vecteur d'attribut de bruit à partir du bruit mesuré ; et
mettre à jour les distributions de vraisemblance en associant le vecteur d'attribut de bruit dans les vecteurs d'attribut spectral représentatifs.

6. Procédé selon la revendication 5 lorsqu'elle dépend de la revendication 4, dans lequel le vecteur d'attribut de bruit et le vecteur d'adaptation caractéristique d'interlocuteur sont des vecteurs spectraux, et la mise à jour des distributions de vraisemblance comprend les étapes consistant à :
multiplier (415) le vecteur d'adaptation caractéristique d'interlocuteur avec chacun des vecteurs d'attribut spectral représentatifs pour générer des premiers vecteurs d'attribut spectral représentatifs modifiés ;
additionner (435) aux premiers vecteurs d'attribut spectral représentatifs modifiés le vecteur d'attribut de bruit pour générer des seconds vecteurs d'attribut spectral représentatifs modifiés ; et
déterminer une distribution statistique des seconds vecteurs d'attribut spectral représentatifs modifiés dans l'espace des attributs en tant que distributions de vraisemblance mises à jour.

7. Procédé selon la revendication 5 lorsqu'elle dépend de la revendication 4, dans lequel le vecteur d'attribut de bruit et le vecteur d'adaptation caractéristique d'interlocuteur sont des vecteurs spectraux, le vecteur d'attribut de bruit et les vecteurs d'attribut spectral représentatifs ont des composantes non logarithmiques, et les vecteurs d'attribut spectral d'entrée et les vecteurs d'adaptation caractéristique d'interlocuteur ont des composantes logarithmiques, et la mise à jour de la distribution de vraisemblance comprend les étapes consistant à :
additionner (425) chacun des vecteurs d'attribut spectral représentatifs avec le vecteur d'attribut de bruit pour générer des premiers vecteurs d'attribut spectral représentatifs modifiés ;
logarithmiser (426) chaque composante des premiers vecteurs d'attribut spectral représentatifs modifiés ;
additionner (427) aux premiers vecteurs d'attribut spectral représentatifs modifiés et logarithmisés le vecteur d'adaptation caractéristique d'interlocuteur pour générer des seconds vecteurs d'attribut spectral représentatifs modifiés ; et
déterminer une distribution statistique des seconds vecteurs d'attribut spectral représentatifs modifiés dans l'espace des attributs en tant que distribution de vraisemblance.

8. Procédé selon la revendication 5 lorsqu'elle dépend de la revendication 4, dans lequel la détermination du vecteur d'adaptation caractéristique d'interlocuteur comprend le calcul de vecteur d'adaptation caractéristique d'interlocuteur pour chacun des vecteurs d'attribut spectral représentatifs, comprenant en outre les étapes consistant à :
attribuer une unité phonétique de la meilleure concordance à chacun des vecteurs d'attribut spectral d'entrée ;
calculer (530) un vecteur de différence entre chacun des vecteurs d'attribut spectral d'entrée et du vecteur d'attribut spectral représentatif respectif ; et
calculer (550) un vecteur de différence moyenne spécifique du phonème en tant que vecteur d'adaptation caractéristique d'interlocuteur pour chacun des vecteurs d'attribut spectral représentatifs respectifs.

9. Procédé selon la revendication 8, dans lequel le vecteur d'adaptation caractéristique d'interlocuteur voit sa moyenne calculée sur les vecteurs de différence moyenne spécifiques du phonème.

10. Procédé selon la revendication 1, comprenant en outre l'étape consistant à :
synthétiser un nom à partir du modèle de mot de la meilleure concordance et composer un numéro correspondant à ce nom.

11. Procédé selon la revendication 1, dans lequel les modèles de mot phonétique (51) sont générés à partir de noms dans un annuaire téléphonique en tant que séquences des sous-modèles de mot en utilisant une traduction de graphème à phonème.

12. Appareil (100) pour réaliser une reconnaissance vocale dans un système de communication ayant une fonction de composition vocale, comprenant :
une première mémoire (50) configurée pour mémoriser des modèles de mot de noms dans un annuaire téléphonique ;
un vocodeur (20) configuré pour générer des vecteurs d'attribut spectral d'entrée à partir d'une entrée vocale dans un mode de reconnaissance vocale ;
un dispositif de reconnaissance vocale (30) incluant (a) un dispositif de calcul de vecteur de vraisemblance (60) configuré pour calculer une séquence de vecteur de vraisemblance à partir des vecteurs d'attribut spectral d'entrée indiquant une vraisemblance dans le temps d'une énonciation d'unités phonétiques, (b) un dispositif de déformation (70) configuré pour déformer la séquence de vecteur de vraisemblance en les modèles de mot, (c) un dispositif de calcul configuré pour calculer des vraisemblances de concordance de modèle de mot à partir des modèles de mot, et (d) un dispositif de détermination configuré pour déterminer un modèle de mot de la meilleure concordance en tant que résultat de reconnaissance ; et
une unité de commande (40) configuré pour initier le mode de reconnaissance vocale ;
**caractérisé en ce que** le dispositif de calcul de des vecteurs de vraisemblance (60) est configuré pour calculer chacun des vecteurs de vraisemblance à partir d'un vecteur d'attribut spectral d'entrée respectif en utilisant une représentation mémorisée d'une langue choisie qui inclut des distributions de vraisemblance calculées à partir de vecteurs représentatifs parmi les vecteurs d'attribut spectral des unités phonétiques indiquant une distribution statistique des vecteurs d'attribut spectral représentatifs dans l'espace des attributs.

13. Appareil (100) selon la revendication 12, comprenant en outre :
un microphone (10) configuré pour enregistrer l'entrée vocale et le bruit ambiant en tant qu'entrée de bruit ;
dans lequel le vocodeur (20) est configuré pour traiter un vecteur d'attribut de bruit à partir de l'entrée de bruit ; et
dans lequel le dispositif de reconnaissance vocale (30) est configuré pour mettre à jour la distribution de vraisemblance en reflétant le vecteur d'attribut de bruit dans les vecteurs d'attribut spectral représentatifs.

14. Appareil (100) selon la revendication 12 ou 13, comprenant en outre :
un dispositif d'adaptation caractéristique d'interlocuteur configuré pour déterminer un vecteur d'adaptation caractéristique d'interlocuteur pour le présent utilisateur et pour mettre à jour la distribution de vraisemblance en reflétant le vecteur d'adaptation caractéristique d'interlocuteur dans les vecteurs d'attribut spectral représentatifs.

15. Appareil (100) selon la revendication 14 lorsqu'elle dépend de la revendication 13, dans lequel le vecteur d'attribut de bruit et le vecteur d'adaptation caractéristique d'interlocuteur sont des vecteurs spectraux et le dispositif d'adaptation caractéristique d'interlocuteur est configuré pour mettre à jour la distribution de vraisemblance par les étapes consistant à :
multiplier le vecteur d'adaptation caractéristique d'interlocuteur avec chacun des vecteurs d'attribut spectral représentatifs pour générer des premiers vecteurs d'attribut spectral représentatifs modifiés ;
additionner aux premiers vecteurs d'attribut spectral représentatifs modifiés le vecteur d'attribut de bruit pour générer des seconds vecteurs d'attribut spectral représentatifs modifiés ; et
déterminer une distribution statistique des seconds vecteurs d'attribut spectral représentatifs modifiés dans l'espace des attributs en tant que distributions de vraisemblance.

16. Appareil (100) selon la revendication 14, dans lequel le dispositif d'adaptation caractéristique d'interlocuteur est configuré pour déterminer ou mettre à jour le vecteur d'adaptation caractéristique d'interlocuteur par les étapes consistant à :
attribuer une unité phonétique de la meilleure concordance à chacun des attributs spectral d'entrée ;
calculer un vecteur de différence entre chacun des vecteurs d'attribut spectral d'entrée et le vecteur d'attribut spectral représentatif respectif ; et
faire la moyenne des vecteurs de différence par unité phonétique et générer un vecteur de différence moyenne spécifique du phonème ; et
faire la moyenne des vecteurs de différence spécifiques du phonème.

17. Appareil (100) selon la revendication 12, comprenant en outre :
un synthétiseur configuré pour synthétiser un nom à partir du modèle de mot de la meilleure concordance ; et
dans lequel l'unité de commande (40) est configurée pour composer un numéro dans l'annuaire téléphonique correspondant au nom synthétisé à partir du modèle de mot de la meilleure concordance.

18. Appareil (100) selon la revendication 17, dans lequel :
le dispositif de déformation (70) est configuré pour déterminer une liste de modèles de mot de la meilleure concordance ;
le synthétiseur est configuré pour synthétiser un nom pour chacun des modèles de mot de la meilleure concordance dans la liste ;
l'appareil (100) comprend en outre :
- un dispositif de sortie configuré pour fournir en sortie les noms synthétisés ; et
- un dispositif de sélection configuré pour sélectionner l'un des noms de sortie par l'utilisateur ; et
l'unité de commande (40) est configurée pour composer le numéro dans l'annuaire téléphonique correspondant au nom sélectionné.

19. Appareil (100) selon la revendication 18, dans lequel :
le dispositif de sortie comprend un haut-parleur (15) du dispositif de communication qui fournit en sortie des ordres de commande à partir de l'unité de commande (40) ;
le microphone (10) est configuré pour enregistrer le bruit ambiant pendant que le haut-parleur fonctionne ; et
l'appareil (100) comprend en outre un dispositif d'élimination d'interférence configuré pour enlever l'interférence de haut-parleur du bruit enregistré pour générer une entrée de bruit.

20. Programme informatique comprenant un code de programme informatique, qui lorsqu'il est exécuté sur un dispositif de communication, permet au dispositif de communication de réaliser un procédé selon l'une des revendications 1 à 11.
